# FASCICULE DE BREVET EUROPEEN

(11) **EP 4 305 290 B1**
(45) Date de publication et mention de la délivrance du brevet: **01.01.2025**
(21) Numéro de dépôt: 22708113.0
(22) Date de dépôt: 24.02.2022
(51) Int. Cl.: F02C 7/32, F01D 25/36

(54) **BOÎTIER DE RELAIS D'ACCESSOIRES DE TURBOMACHINE D'AÉRONEF COMPRENANT UN MOTEUR TRÈS BASSE VITESSE ET PROCÉDÉ D'UTILISATION**
HILFSGETRIEBE FÜR EIN FLUGZEUGTURBINENTRIEBWERK MIT EINEM MOTOR MIT EXTREM NIEDRIGER GESCHWINDIGKEIT UND VERWENDUNGSVERFAHREN
ACCESSORY GEARBOX FOR AN AIRCRAFT TURBINE ENGINE COMPRISING AN ULTRA LOW-SPEED MOTOR AND USE METHOD

(30) Priorité: 12.03.2021 FR 2102434
(43) Date de publication de la demande: 17.01.2024
(73) Titulaire: SAFRAN AIRCRAFT ENGINES, 75015 Paris (FR)
(72) Inventeur: DAUTREPPE, Frédéric, 77550 MOISSY-CRAMAYEL (FR)
(74) Mandataire: Argyma
(86) Numéro de dépôt international: PCT/EP2022/054591
(87) Numéro de publication internationale: WO 2022/189153

(56) Documents cités:
- EP-A1- 3 318 727
- EP-A1- 3 415 729
- US-B1- 9 664 070

## Description

### Domaine technique

La présente invention concerne une turbomachine d'aéronef comprenant un boîtier de relais d'accessoires, connu de l'homme du métier sous la dénomination anglaise « Accessory Gear Box (AGB) », dans lequel est monté un moteur très basse vitesse.

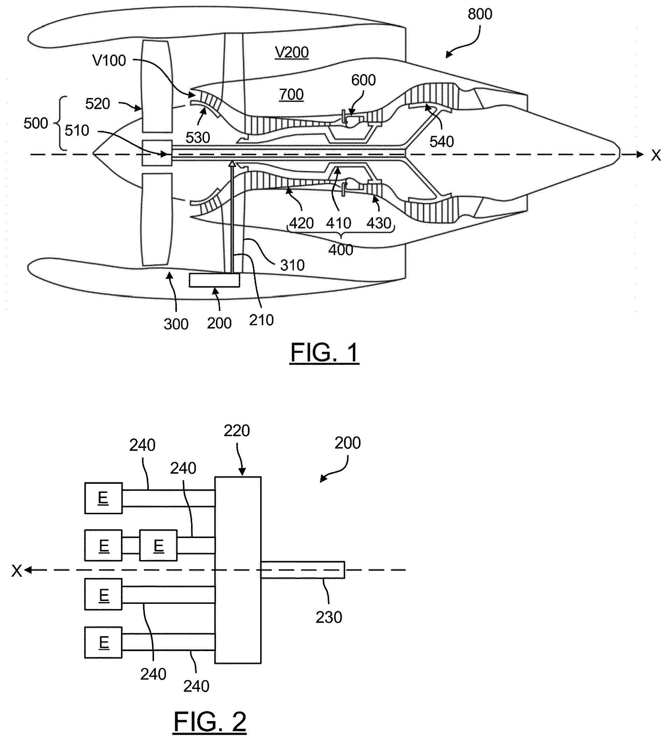

De manière connue, en référence à la [Fig.1], il est représenté une turbomachine 800 s'étendant selon un axe longitudinal X et configurée pour permettre la propulsion d'un aéronef à partir de l'accélération d'un flux d'air circulant d'amont en aval dans la turbomachine 800. Par la suite, les termes « amont » et « aval » sont définis par rapport à l'orientation de l'axe longitudinal X. Les termes « intérieur » et « extérieur » sont quant à eux définis selon la direction radiale par rapport à l'axe longitudinal X.

De manière connue, la turbomachine 800 représentée sur la [Fig.1] est de type à double corps et double flux et comprend, à l'amont, une soufflante 520 montée dans un carter de soufflante 300, et en aval, un compartiment inter-veines 700 (connu sous sa dénomination anglaise « core compartment ») délimitant une veine primaire V100, radialement intérieure, et une veine secondaire V200, radialement extérieure, guidant chacune une partie du flux d'air. Au niveau de la veine primaire V100, la turbomachine 800 comprend d'amont en aval un compresseur basse pression 530, un compresseur haute pression 420, une chambre de combustion 600, une turbine haute pression 430 et une turbine basse pression 540. La turbine basse pression 540 est configurée pour entraîner en rotation le compresseur basse pression 530 et la soufflante 520 via un arbre basse pression 510, formant ensemble un corps basse pression 500. La turbine haute pression 430 est quant à elle configurée pour entraîner en rotation le compresseur haute pression 420 via un arbre haute pression 410, formant ensemble un corps haute pression 400. L'arbre haute pression 410 s'étend extérieurement autour de l'arbre basse pression 510 selon l'axe longitudinal X.

En pratique, après l'arrêt de la turbomachine 800, la convection de l'air génère un gradient thermique vertical dans la veine primaire V100, notamment au niveau du corps haute pression 400, en particulier dans le compresseur haute pression 410. Un tel gradient thermique tend à dilater de manière différenciée le corps haute pression 400 et à générer une cambrure indésirable. Un tel phénomène est connu de l'homme du métier sous le terme anglais « bowed rotor » et atteint son paroxysme environ deux heures après l'arrêt de la turbomachine 800.

Pour éviter ce phénomène, il est connu d'entraîner à très basse vitesse la turbomachine 800 après son arrêt, de manière à faire circuler de l'air pour avoir une homogénéisation de la température de l'air dans la veine primaire V100 de la turbomachine 800 et éviter l'apparition d'un gradient thermique. A cet effet, il a été proposé d'entraîner en rotation le compresseur haute pression 420 en appliquant un couple d'entraînement au boîtier de relais d'accessoires 200 de la turbomachine 800 qui est relié au compresseur haute pression 420 par un arbre radial 210 positionné dans un bras structural 310 ou une aube de redresseur (« Outer Guide Vane », d'abréviation « OGV »).

De manière connue, comme illustré sur les figures 1 et 2, le boîtier de relais d'accessoires 200 est monté extérieurement au carter de soufflante 300. Le boîtier de relais d'accessoires 200 comprend un train d'engrenages 220 comprenant un arbre d'entrée 230 couplé à l'arbre radial 210 et une pluralité d'arbres de sortie 240 couplés chacun à un équipement E, voire plusieurs équipements E en série. Les équipements E désignent par exemple des pompes à carburant, des générateurs électriques, des groupes de lubrification, un démarreur et un déshuileur. Lorsque la turbomachine 800 est en fonctionnement, l'arbre d'entrée 230 fournit un couple aux arbres de sortie 240. A l'inverse, quand la turbomachine 800 est à l'arrêt, un équipement E peut fournir un couple à l'arbre d'entrée 230 et entraîner en rotation le compresseur haute pression 420.

Une première solution pour entraîner le compresseur haute pression 420 après l'arrêt de la turbomachine 800 serait d'utiliser le démarreur du boîtier de relais d'accessoires 200, traditionnellement utilisé lors du démarrage pour entraîner le corps haute pression 400 à une vitesse de rotation très élevée pendant une courte durée. Un tel démarreur, du fait de sa fonction première, n'est toutefois pas adapté pour réaliser un entraînement à très basse vitesse pendant une longue durée. Une solution alternative serait d'utiliser un moteur-générateur dont la fonction est de générer de l'énergie électrique au cours du fonctionnement de la turbomachine 800. Un tel moteur générateur n'est toutefois performant qu'aux vitesses de fonctionnement de la turbomachine, à savoir des vitesses hautes par comparaison à celle souhaitée pour l'équilibrage thermique, et ne permet pas de réaliser un entraînement à très basse vitesse pendant une longue durée.

Pour s'affranchir de ces inconvénients, il est connu d'ajouter dans le boîtier de relais d'accessoires 200 un moteur électrique dédié à l'entraînement du compresseur haute pression 420 à très basse vitesse pendant une longue durée, i.e. de l'ordre de 1 à 10 tr/ min pendant environ une à plusieurs heures. Si un tel moteur très basse vitesse permet une rotation suffisante pour un équilibrage thermique efficace et évite l'apparition du phénomène de « bowed rotor », il augmente toutefois de manière non souhaitée la masse et l'encombrement du boîtier de relais d'accessoires 200. En effet, du fait de sa très faible vitesse, le moteur très basse vitesse n'est pas compatible avec les autres équipements E du boîtier de relais d'accessoires 200 et nécessite d'être monté sur un arbre d'entraînement 230 de très faible vitesse qui lui est dédié, ce qui nécessite de modifier le boîtier de relais d'accessoires 200. Le brevet US9664070B1 et la demande de brevet EP3415729A1 enseignent ainsi un arbre de démarrage distinct des arbres hautes vitesses sur lequel est monté un moteur électrique très basse vitesse.

Une solution pour éliminer cet inconvénient serait de proposer un moteur générateur qui soit capable de fonctionner en générateur à haute vitesse tout en étant capable de fonctionner en moteur à très basse vitesse afin de pouvoir le monter sur un arbre d'entraînement 230 en série avec un autre équipement E configuré pour fonctionner sur une plage de hautes vitesses. Une telle solution s'avère complexe, onéreuse et pénaliserait la masse et l'encombrement du boîtier de relais d'accessoires 200.

L'invention vise ainsi un boîtier de relais d'accessoires de turbomachine d'aéronef comprenant un moteur très basse vitesse qui élimine au moins une partie des inconvénients cités ci-dessus.

### PRESENTATION DE L'INVENTION

L'invention concerne un boîtier de relais d'accessoires de turbomachine d aéronef selon la revendication 1, la turbomachine s'étendant selon un axe longitudinal et comprenant un corps basse pression, un corps haute pression et un arbre radial configuré relié au corps haute pression, le boîtier de relais d'accessoires comprenant un train d'engrenages comprenant au moins un arbre d'entrée, configuré pour être couplé mécaniquement à l'arbre radial, et une pluralité d'arbres de sortie, configurés pour être couplés en rotation à des équipements, au moins un arbre de sortie, désigné par la suite arbre mixte, étant couplé en rotation à un équipement haute vitesse configuré pour fonctionner sur une plage de hautes vitesses.

L'invention est remarquable en ce que le boîtier de relais d'accessoires comprend :
- un moteur très basse vitesse configuré pour fonctionner sur une plage de très basses vitesses, inférieure à la plage de hautes vitesses dudit équipement haute vitesse,
- un système d'embrayage configuré pour s'accoupler avec ledit arbre mixte, le moteur très basse vitesse étant monté sur le système d'embrayage de sorte que :
- dans une position embrayée du système d'embrayage, le moteur très basse vitesse est couplé à l'arbre mixte, de manière à entraîner en rotation le corps haute pression, lorsque la turbomachine est à l'arrêt, et
- dans une position débrayée du système d'embrayage, le moteur très basse vitesse est découplé de l'arbre mixte afin d'être protégé des vitesses transmises par le corps haute pression pour entraîner l'équipement haute vitesse lorsque la turbomachine est en fonctionnement.

Grâce à l'invention, un moteur très basse vitesse, parfaitement adapté pour entraîner le corps haute pression, est intégré de manière compacte, pratique et économique sur le boîtier de relais d'accessoires. En effet, le moteur très basse vitesse est monté en série avec un équipement haute vitesse sur un même arbre de sortie en surpassant les difficultés techniques liées à leur incompatibilité. Grâce au système d'embrayage de l'invention, le moteur très basse vitesse peut avantageusement être découplé de l'arbre d'engrenage lorsque celui-ci est entraîné par le corps haute pression, i.e. lorsque la turbomachine est en fonctionnement. Ceci permet de protéger le moteur très basse vitesse des vitesses de fonctionnement de la turbomachine. Ainsi, l'invention évite avantageusement d'utiliser un arbre de sortie dédié au moteur très basse vitesse et limite ainsi la masse et l'encombrement. Un tel système d'embrayage est en outre simple et pratique, ce qui évite d'ajouter de la complexité au boîtier de relais d'accessoires.

Selon un aspect de l'invention, le moteur très basse vitesse est de type électrique, ce qui lui confère une structure simple et économique. De préférence, le moteur très basse vitesse est exempt de réducteur afin de limiter sa masse et son encombrement.

Selon un aspect de l'invention, le moteur très basse vitesse comprend un rotor et un stator, le système d'embrayage comprenant :
- un volant solidaire en rotation de l'arbre mixte,
- un organe de support solidaire en rotation du rotor du moteur très basse vitesse, monté libre en rotation autour de l'arbre mixte,
- un disque mobile et un disque fixe selon l'axe longitudinal montés sur l'organe de support, de part et d'autre du volant, et
- un organe de déplacement du disque mobile de sorte qu'en position embrayée, le volant soit en prise avec le disque mobile et le disque fixe, et qu'en position débrayée, le volant soit hors prise du disque mobile et du disque fixe.

Un tel système d'embrayage possède une structure simple et pratique permettant de coupler et découpler de manière aisée le moteur très basse vitesse.

Selon un aspect de l'invention, le volant est monté libre selon l'axe longitudinal sur l'arbre mixte, de manière à être déplacé contre le disque fixe par le disque mobile, sous l'action de l'organe de déplacement.

Selon un aspect préféré de l'invention, le système d'embrayage comprend des moyens de montage du volant sur l'arbre mixte configurés pour autoriser un déplacement longitudinal et bloquer un déplacement radial et tangentiel du volant par rapport à l'arbre mixte. De préférence, les moyens de montage se présentent sous la forme de cannelures longitudinales. De tels moyens de montage permettent avantageusement de favoriser la mise en prise des disques sur le volant, donc le passage entre la position débrayée et la position embrayée.

Selon un aspect de l'invention, l'organe de déplacement se présente sous la forme d'un actionneur électromagnétique. Un tel organe de déplacement est économique.

Selon un aspect de l'invention, le disque mobile et le disque fixe sont exempts de garniture. De tels disques sont avantageusement adaptés pour une mise en prise lorsque l'arbre mixte est à l'arrêt. Ils permettent également un gain de masse, une économie et nécessitent moins de maintenance.

Selon un aspect préféré de l'invention, le système d'embrayage comprend un multiplicateur monté sur l'organe de support entre le moteur très basse vitesse et le volant, configuré pour entraîner le volant à une vitesse de rotation supérieure à celle du moteur très basse vitesse. Ceci permet avantageusement de compenser le couple résistant du train d'engrenages, de manière à entraîner le corps haute pression à la vitesse du moteur très basse vitesse.

L'invention concerne également une turbomachine d'aéronef s'étendant selon un axe longitudinal et comprenant un corps basse pression, un corps haute pression et un arbre radial relié au corps haute pression, ladite turbomachine comprenant un boîtier de relais d'accessoires tel que décrit précédemment dans lequel :
- l'arbre d'entrée du boîtier de relais d'accessoires est couplé mécaniquement à l'arbre radial,
- dans la position embrayée, le moteur très basse vitesse est couplé au corps haute pression de manière à l'entraîner en rotation, afin de favoriser son refroidissement par circulation d'air lorsque la turbomachine est à l'arrêt,
- dans la position débrayée, le moteur très basse vitesse est découplé du corps haute pression afin d'être protégé des hautes vitesses transmises par le corps haute pression à l'arbre mixte pour entraîner l'équipement haute vitesse lorsque la turbomachine est en fonctionnement.

De manière avantageuse, un tel moteur très basse vitesse permet d'entraîner à très basse vitesse le corps haute pression lorsque la turbomachine est à l'arrêt, de manière à faire circuler de l'air pour avoir une homogénéisation de la température de l'air dans la veine primaire de la turbomachine, notamment au niveau du compresseur haute pression. Ceci permet de favoriser le refroidissement de la turbomachine, en évitant l'apparition du phénomène « bowed rotor », à savoir de cambrure du corps haute pression engendrée par un dilatation thermique différenciée. Ceci permet de favoriser les performances et la longévité de la turbomachine à moyen et long terme. Une telle turbomachine est notamment adaptée pour effectuer plusieurs vols par jour du fait de son refroidissement favorisé.

Selon un aspect de l'invention, le corps haute pression comprend un compresseur haute pression, une turbine haute pression et un arbre haute pression reliant mécaniquement le compresseur haute pression et la turbine haute pression, l'arbre radial étant relié à l'arbre haute pression du corps haute pression. Le moteur très basse vitesse permet avantageusement d'entraîner uniquement le compresseur haute pression et la turbine haute pression, dans lesquels le phénomène « bowed rotor » est le plus susceptible d'apparaître. Le boîtier de relais d'accessoires est par ailleurs utilisé suivant un fonctionnement inversé, i.e. moteur, par rapport à son fonctionnement normal lorsque la turbomachine en fonctionnement, i.e. passif entraîné par le corps haute pression.

L'invention concerne par ailleurs un procédé d'utilisation selon la revendication 8 d'une turbomachine d'aéronef telle que décrite précédemment, dans lequel le système d'embrayage est initialement en position débrayée, le procédé d'utilisation comprenant :
- après l'arrêt de la turbomachine, une étape d'embrayage du moteur très basse vitesse sur l'arbre mixte, par déplacement du système d'embrayage en position embrayée, et
- une étape d'entraînement, par le moteur très basse vitesse, de l'arbre mixte, de manière à entraîner en rotation le corps haute pression afin de favoriser son refroidissement par circulation d'air.

Un tel procédé est avantageusement simple et pratique à mettre en oeuvre, tout en étant très efficace. En effet, il nécessite uniquement de coupler le moteur très basse vitesse sur l'arbre mixte avant de mettre en oeuvre la circulation d'air. La circulation d'air est avantageusement mise en oeuvre à faible vitesse et sur un temps relativement long grâce à un moteur très basse vitesse dédié adapté.

De préférence, lors de l'étape d'embrayage, l'arbre mixte est à l'arrêt, de manière à favoriser la longévité du disque mobile et du disque fixe en minimisant les frottements lors de la mise en prise avec le volant.

Selon un aspect préféré de l'invention, lors de l'étape d'entraînement, le moteur très basse vitesse entraîne l'arbre mixte à une vitesse inférieure à 10tr/min, de préférence inférieure à 5tr/min. Le moteur très basse vitesse est avantageusement adapté pour les très faibles vitesses, ce qui permet de faire tourner régulièrement vers le bas les parties du corps haute pression les plus chaudes situées en haut, et de provoquer ainsi une circulation d'air efficace, notamment par convection dans le corps haute pression.

Selon un aspect de l'invention, lors de l'étape d'entraînement, le moteur très basse vitesse entraîne l'arbre mixte pendant une durée supérieure à 30 minutes, préférentiellement supérieure à 45 minutes. Ceci permet une circulation d'air dans le corps haute pression suffisamment longue et efficace pour éviter toute apparition du phénomène « bowed rotor ». En effet, un tel phénomène peut apparaître et durer durant plusieurs heures après l'arrêt de la turbomachine.

Selon un aspect préféré, le procédé d'utilisation comprend, après l'étape d'entraînement, une étape de débrayage du moteur très basse vitesse de l'arbre mixte par déplacement du système d'embrayage en position débrayée. La turbomachine est ainsi prête pour une nouvelle phase de fonctionnement de manière simple et pratique. Le moteur très basse vitesse est quant à lui découplé pour éviter d'être entraîné à haute vitesse, ce pour quoi il n'est pas adapté.

De préférence, lors de l'étape de débrayage, l'arbre mixte est à l'arrêt, de manière à favoriser la longévité du disque mobile et du disque fixe en minimisant les frottements lors de la mise hors prise du volant.

Selon un aspect préféré, le procédé d'utilisation est mis en oeuvre de manière automatique, c'est-à-dire sans intervention du pilote ou d'un opérateur après l'arrêt de la turbomachine.

Selon un aspect préféré, lors du fonctionnement de la turbomachine, le système d'embrayage est en position débrayée de manière à ce que le corps haute pression entraîne l'arbre mixte découplé du moteur très basse vitesse, afin d'entraîner uniquement l'équipement haute vitesse. L'arbre mixte est ainsi à la fois utilisé pour les plages de faibles vitesses et de hautes vitesses, à la fois lors du fonctionnement de la turbomachine et après son arrêt. Ceci permet d'optimiser l'utilisation de l'arbre mixte et de favoriser la compacité du boîtier de relais d'accessoires.

### PRESENTATION DES FIGURES

L'invention sera mieux comprise à la lecture de la description qui va suivre, donnée à titre d'exemple, et se référant aux figures suivantes, données à titre d'exemples non limitatifs, dans lesquelles des références identiques sont données à des objets semblables.
La [Fig.1] est une représentation schématique en coupe longitudinale d'une turbomachine d'aéronef comprenant un boîtier de relais d'accessoires selon l'art antérieur.
La [Fig.2] est une représentation schématique en coupe circonférentielle du boîtier de relais d'accessoires de la [Fig.1].
La [Fig.3] est une représentation schématique en coupe longitudinale d'une turbomachine d'aéronef comprenant un boîtier de relais d'accessoires avec un système d'embrayage d'un moteur très basse vitesse selon une forme de réalisation de l'invention.
La [Fig.4] est une représentation schématique en coupe circonférentielle du boîtier de relais d'accessoires de la [Fig.3].
La [Fig.5A] est une représentation schématique en demi-coupe longitudinale de l'arbre mixte du boîtier de relais d'accessoires de la [Fig.4] comprenant le moteur très basse vitesse lorsque le système d'embrayage est en position embrayée.
La [Fig.5B] est une représentation schématique en demi-coupe longitudinale de l'arbre mixte de la [Fig.5A] lorsque le système d'embrayage est en position débrayée lors du fonctionnement de la turbomachine.
La [Fig.6] est une représentation schématique d'un mode de mise en oeuvre d'un procédé d'utilisation selon l'invention du boîtier de relais d'accessoires de la [Fig.4] après l'arrêt de la turbomachine.
La [Fig.7] est une représentation schématique de l'étape d'embrayage du moteur très basse vitesse selon le procédé d'utilisation de la [Fig.6].
La [Fig.8] est une représentation schématique de l'étape d'entraînement de l'arbre mixte pour favoriser le refroidissement du corps haute pression selon le procédé d'utilisation de la [Fig.6].
La [Fig.9] est une représentation schématique de l'étape de débrayage du moteur très basse vitesse selon le procédé d'utilisation de la [Fig.6].

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE DE L'INVENTION

L'invention concerne une turbomachine d'aéronef permettant d'intégrer de manière compacte, économique et pratique un moteur très basse vitesse dans le boîtier de relais d'accessoires, afin d'entraîner à très basse vitesse le corps haute pression pour favoriser son refroidissement après l'arrêt de la turbomachine.

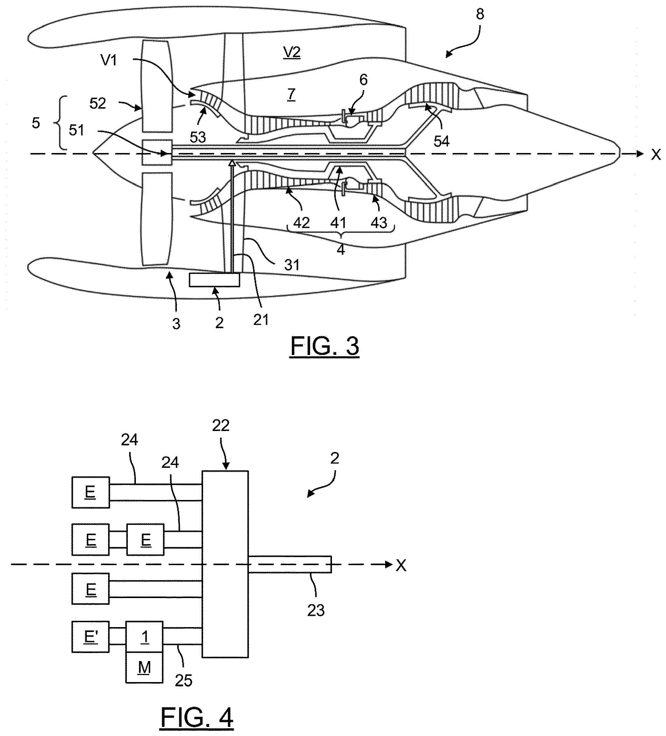

Comme illustré sur la [Fig.3] et décrit dans le préambule, il est représenté une turbomachine 8 s'étendant selon un axe longitudinal X et configurée pour permettre la propulsion d'un aéronef à partir de l'accélération d'un flux d'air circulant d'amont en aval dans la turbomachine 8. Par la suite, les termes « amont » et « aval » sont définis par rapport à l'orientation de l'axe longitudinal X. Les termes « intérieur » et « extérieur » sont quant à eux définis selon la direction radiale par rapport à l'axe longitudinal X.

Comme décrit dans le préambule, la turbomachine 8 représentée sur la [Fig.3] est de type à double corps et double flux et comprend, à l'amont, une soufflante 52 montée dans un carter de soufflante 3, et en aval, un compartiment inter-veines 7 (connu sous sa dénomination anglaise « core compartment ») délimitant une veine primaire V1, radialement intérieure, et une veine secondaire V2, radialement extérieure, guidant chacune une partie du flux d'air. Au niveau de la veine primaire V1, la turbomachine 8 comprend d'amont en aval un compresseur basse pression 53, un compresseur haute pression 42, une chambre de combustion 6, une turbine haute pression 43 et une turbine basse pression 54. La turbine basse pression 54 est configurée pour entraîner en rotation le compresseur basse pression 53 et la soufflante 52 via un arbre basse pression 51, formant ensemble un corps basse pression 5. La turbine haute pression 43 est quant à elle configurée pour entraîner en rotation le compresseur haute pression 42 via un arbre haute pression 41, formant ensemble un corps haute pression 4. L'arbre haute pression 41 s'étend extérieurement autour de l'arbre basse pression 51 selon l'axe longitudinal X.

Comme illustré sur les figures 3 et 4 et décrit dans le préambule, la turbomachine 8 comprend également un boîtier de relais d'accessoires 2 qui est relié au compresseur haute pression 42 par un arbre radial 21 positionné dans un bras structural dit « aube de redresseur 31 » (« Outer Guide Vane », d'abréviation « OGV »). Le boîtier de relais d'accessoires 2 est monté extérieurement au carter de soufflante 3. Le boîtier de relais d'accessoires 2 comprend un train d'engrenages 22 comprenant un arbre d'entrée 23 couplé à l'arbre radial 21 et une pluralité d'arbres de sortie 24 couplés chacun à un équipement E, voire deux équipements E en série. Les équipements E désignent par exemple des pompes à carburant, des générateurs électriques, des groupes de lubrification, un démarreur et un déshuileur. Lorsque la turbomachine 8 est en fonctionnement, l'arbre d'entrée 23 fournit un couple aux arbres de sortie 24. A l'inverse, quand la turbomachine 8 est à l'arrêt, un équipement E peut fournir un couple à l'arbre d'entrée 23 et entraîner en rotation le compresseur haute pression 42.

Selon l'invention, en référence à la [Fig.4], le boîtier de relais d'accessoires 2 comprend :
- un arbre mixte 25 parmi les arbres de sortie 24, couplé en rotation à un équipement haute vitesse E' configuré pour fonctionner sur une plage de hautes vitesses,
- un moteur très basse vitesse M configuré pour fonctionner sur une plage de basses vitesses, inférieure à la plage de hautes vitesses dudit équipement haute vitesse E',
- un système d'embrayage 1 configuré pour s'accoupler avec l'arbre mixte 25, le moteur très basse vitesse M étant monté sur le système d'embrayage 1 de sorte que :
- dans une position embrayée P1 du système d'embrayage 1, le moteur très basse vitesse M est couplé à l'arbre mixte 25, de manière à entraîner en rotation le corps haute pression 4, lorsque la turbomachine 8 est à l'arrêt A, et
- dans une position débrayée P2 du système d'embrayage 1, le moteur très basse vitesse M est découplé de l'arbre mixte 25 afin d'être protégé des vitesses transmises par le corps haute pression 4 pour alimenter l'équipement haute vitesse E' lorsque la turbomachine 8 est en fonctionnement F.

De manière préférée, l'équipement haute vitesse E' se présente sous la forme d'un générateur électrique. Il va cependant de soi que l'équipement haute vitesse E' pourrait se présenter sous une autre forme, tel qu'un groupe de lubrification, une pompe à carburant ou une pompe hydraulique à titre d'exemples non limitatifs.

L'invention permet ainsi, dans la position embrayée P1, d'entraîner à faible vitesse le corps haute pression 4, et notamment le compresseur haute pression 42, pour favoriser son refroidissement. En effet, la circulation de l'air après l'arrêt de la turbomachine 8 permet d'éviter l'apparition d'un gradient thermique vertical dans la veine primaire V1 généré par convection et radiation, qui tend à dilater de manière différenciée le corps haute pression 4 et à générer une cambrure indésirable, un tel phénomène étant connu de l'homme du métier sous le terme anglais « bowed rotor ». Le moteur très basse vitesse M est avantageusement adapté pour fournir une faible vitesse adaptée pour la circulation d'air, et ce sur une durée suffisante pour être efficace.

L'invention permet de plus d'intégrer de manière compacte, économique et pratique le moteur très basse vitesse M sur le boîtier de relais d'accessoires 2, à savoir en série avec un équipement haute vitesse E' en surpassant les difficultés techniques liées à leur incompatibilité. L'utilisation d'un système d'embrayage 1, compact et économique, permet en effet avantageusement de découpler le moteur très basse vitesse M lorsque la turbomachine 8 est en fonctionnement F et entraîne l'arbre mixte 25 sur une plage de hautes vitesses, incompatible pour le moteur très basse vitesse M.

On précise que la turbomachine 8 est dite en fonctionnement F lorsque la chambre de combustion 6 est alimentée en carburant et à l'arrêt lorsque la chambre de combustion 6 n'est pas alimentée en carburant.

Dans cet exemple, l'arbre mixte 25 est unique car un unique moteur très basse vitesse M suffit pour entraîner le corps haute pression 4 afin de favoriser son refroidissement. Il va cependant de soi que le boîtier de relais d'accessoires 2 pourrait comprendre plusieurs arbres mixtes 25 comportant chacun un moteur très basse vitesse M. L'un des moteurs très basse vitesse M pourrait être dédié au refroidissement de la turbomachine 8 pour éviter le « bowed rotor » et les autres dédiés à une fonction différente.

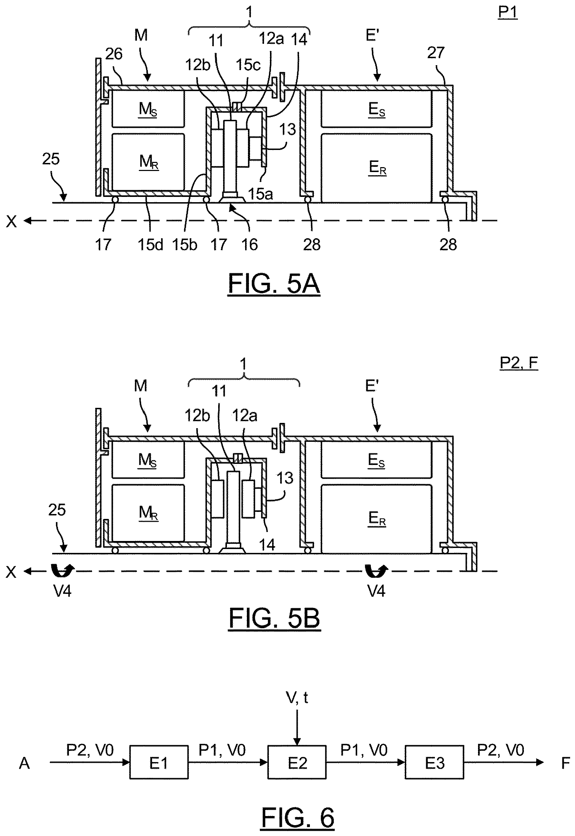

Dans l'exemple des figures 5A et 5B, le système d'embrayage 1 est positionné axialement sur l'arbre mixte 25 entre le moteur très basse vitesse M et l'équipement haute vitesse E', le moteur très basse vitesse M étant le plus rapproché du train d'engrenages 22. Le moteur très basse vitesse M comprend un rotor M_{R}, i.e. une partie mobile, qui est solidaire en rotation du système d'embrayage 1, et un stator M_{S}, i.e. une partie fixe, qui est monté sur un carter de moteur 26 relié à un carter d'équipement 27 relié au carter de soufflante 3 ([Fig.3]). L'équipement haute vitesse E' comprend quant à lui un rotor E_{R}, qui est solidaire en rotation de l'arbre mixte 25, et un stator E_{S}, qui est solidaire du carter d'équipement 27 de même que le stator M_{S} du moteur très basse vitesse M. Dans l'exemple des figures 5A et 5B, un ensemble de roulements 28 est positionné entre le carter d'équipement 27 et l'arbre mixte 25 de manière à maintenir le carter d'équipement 27 fixe découplé de l'arbre mixte 25 mobile. Il va de soi que le système d'embrayage 1, le moteur très basse vitesse M et l'équipement haute vitesse E' pourraient être positionnés axialement de manière différente. A titre d'exemple, le système d'embrayage 1 et le moteur très basse vitesse M pourraient être inversés.

Toujours dans l'exemple des figures 5A et 5B, l'arbre mixte 25 est monobloc. Selon un autre aspect préféré, l'arbre mixte 25 se présente sous la forme de deux arbres coaxiaux assemblés entre eux de manière à être solidaires en rotation. L'un des arbres coaxiaux est configuré pour supporter l'équipement haute vitesse E' et l'autre le moteur très basse vitesse M. Ceci permet de désassembler aisément l'arbre avec l'équipement haute vitesse E', le carter d'équipement 27 ayant préalablement été désassemblé du carter de moteur 26.

On décrit par la suite plus précisément le système d'embrayage 1.

Comme illustré sur les figures 5A et 5B, le système d'embrayage 1 comprend une partie couplée à l'arbre mixte 25 et une partie libre sur laquelle est montée le moteur très basse vitesse M, la partie couplée et la partie libre étant configurées pour venir en prise afin de coupler le moteur très basse vitesse M à l'arbre mixte 25. Plus précisément, le système d'embrayage 1 comprend un volant 11, monté sur l'arbre mixte 25 de manière à être couplé en rotation, ainsi qu'un organe de support 14 monté libre autour de l'arbre mixte 25. Le rotor M_{R} du moteur très basse vitesse M est monté solidaire en rotation de l'organe de support 14. Le système d'embrayage 1 comprend en outre un disque fixe 12a et un disque mobile 12b montés de part et d'autre du volant 11 sur l'organe de support 14. Un organe de déplacement 13 est configuré pour déplacer le disque mobile 12b de sorte que :
- dans la position embrayée P1 illustrée sur la [Fig.5A], le disque fixe 12a et le disque mobile 12b sont en prise avec le volant 11, i.e. prennent en sandwich le volant 11 pour coupler l'organe de support 14 à l'arbre mixte 25,
- dans la position débrayée P2 illustrée sur la [Fig.5B], le disque fixe 12a et le disque mobile 12b s'étendent hors prise du volant 11 afin de découpler l'organe de support 14 de l'arbre mixte 25.

Dans l'exemple des figures 5A et 5B, l'organe de déplacement 13 se présente sous la forme d'un actionneur électromagnétique monté sur l'organe de support 14 du côté du disque mobile 12b. Un tel organe de déplacement 13 se présente avantageusement sous la forme d'un système de commande tout ou rien (TOR) de conception simple et économique. Il va cependant de soi qu'un organe de déplacement 13 différent pourrait être utilisé.

Toujours dans l'exemple des figures 5A et 5B, l'organe de support 14 comprend deux portions de montage 15a, 15b se faisant face de part et d'autre du volant 11 sur lesquelles sont montés le disque fixe 12a et le disque mobile 12b. L'organe de support 14 comprend également une portion de liaison 15c reliant les portions de montage 15a, 15b ainsi qu'une portion de couplage 15d sur laquelle est monté le rotor M_{R} du moteur très basse vitesse M. La portion de liaison 15c est prévue pour permettre l'assemblage et le désassemblage des portions de montage 15a, 15b, afin de permettre le montage (ou le démontage et le remplacement) du volant 11 à l'intérieur de l'organe de support 14. Un ensemble de roulements 17 est positionné entre la portion de couplage 15d et l'arbre mixte 25 de manière à maintenir l'organe de support 14 découplé de l'arbre mixte 25. De tels roulements 17 sont par exemple à billes, et peuvent être prévus pour maintenir axialement l'organe de support 14 par rapport à l'arbre mixte 25, afin que la portion de couplage 15d ne risque pas de frotter contre le boîtier de relais d'accessoires 2 lors de la rotation du rotor M_{R} du moteur très basse vitesse M.

De préférence, comme illustré sur les figures 5A et 5B, le volant 11 est monté sur l'arbre mixte 25 grâce à des moyens de couplage 16 configurés pour autoriser un déplacement longitudinal et bloquer un déplacement radial et tangentiel du volant 11 par rapport à l'arbre mixte 25 pour permettre de transmettre le couple de rotation. Ceci permet de maintenir le volant 11 solidaire en rotation de l'arbre mixte 25 tout en permettant de limiter très fortement les efforts subis par l'organe de support 14 dans la direction axiale. En effet, puisque le volant 11 est prévu pour coulisser par rapport à l'arbre mixte 25, la mise en prise et/ou hors prise avec les disques 12a, 12b n'entraîne pas d'effort axial particulier sur l'organe de support 14. En pratique, le déplacement du disque mobile 12b en position embrayée P1 entraîne celui du volant 11 contre le disque fixe 12a, comme ce sera vu par la suite dans le procédé d'utilisation.

De préférence également, le disque mobile 12a et le disque fixe 12b sont exempts de garniture, i.e. de surface de frottement configuré pour venir en contact avec le volant 11 pour protéger les disques 12a, 12b. En effet, comme ce sera vu par la suite, le déplacement entre la position embrayée P1 et la position débrayée P2 est mis en oeuvre lorsque la turbomachine 8 est à l'arrêt, l'arbre mixte 25 étant à l'arrêt également. Ceci permet de minimiser l'usure des disques 12a, 12b et réduire leur maintenance. La masse et le coût de tels disques 12a, 12b sont avantageusement réduits.

Dans certaines formes de réalisation de l'invention, le système d'embrayage 11 comprend également un multiplicateur (non représenté) monté sur l'organe de support 14 entre le moteur très basse vitesse M et le volant 11. Le multiplicateur est configuré pour entraîner le volant 11 à une vitesse de rotation supérieure à celle du moteur très basse vitesse M, afin de compenser le couple résistant du train d'engrenages 22, de manière à entraîner le corps haute pression 4 à la vitesse du moteur très basse vitesse M.

En référence à la [Fig.5B], l'invention concerne également un procédé d'utilisation de la turbomachine 8 précédemment décrite, dans lequel, lors du fonctionnement F de la turbomachine 8, le système d'embrayage 1 est en position débrayée P2 de manière à ce que le corps haute pression 4 entraîne l'arbre mixte 25 découplé du moteur très basse vitesse M. Autrement dit, lors du fonctionnement de la turbomachine 8, le couple d'entraînement V4 du corps haute pression 4 est uniquement transmis à l'équipement haute vitesse E' pour l'alimenter. Dans le cas d'un générateur électrique, celui-ci peut avantageusement fournir de l'énergie électrique. Ceci permet avantageusement de protéger le moteur très basse vitesse M des vitesses élevées.

En référence à la [Fig.6], le procédé d'utilisation comprend également, après l'arrêt de la turbomachine 8 :
- une étape d'embrayage E1 du moteur très basse vitesse M sur l'arbre mixte 25, par déplacement du système d'embrayage 1 en position embrayée P1,
- une étape d'entraînement E2, par le moteur très basse vitesse M, de l'arbre mixte 25, de manière à entraîner en rotation le corps haute pression 4 afin de favoriser son refroidissement par circulation d'air, et
- une étape de débrayage E3 du moteur très basse vitesse M de l'arbre mixte 25, par déplacement du système d'embrayage 1 en position débrayée P2.

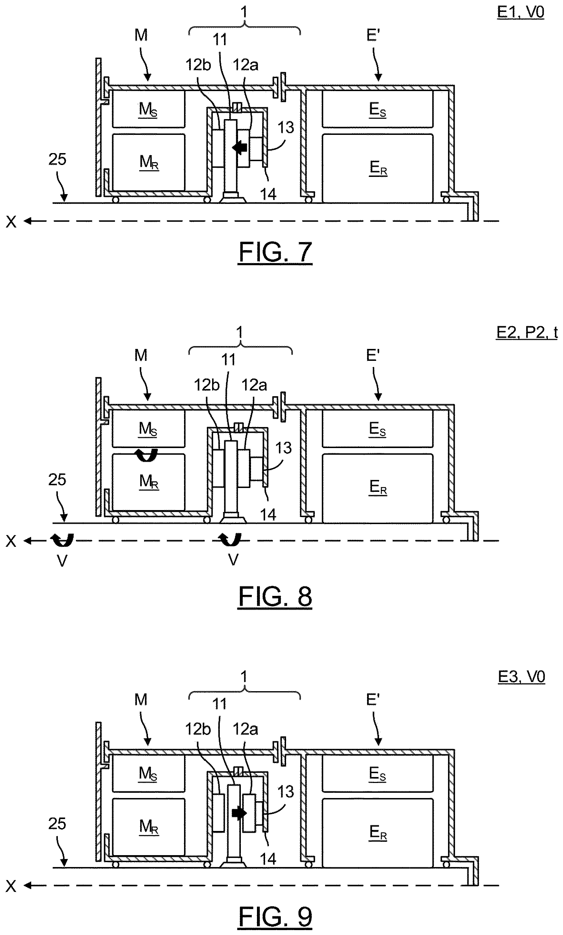

Comme illustré sur la [Fig.7], suite à une phase de fonctionnement F ([Fig.5B]) où le système d'embrayage 1 est en position débrayée P2, la turbomachine 8 est mise à l'arrêt A (par exemple suite à un atterrissage) et cesse d'entraîner le corps haute pression 4 et par suite l'arbre mixte 25. L'étape d'embrayage E1 permet alors de déplacer le système d'embrayage 1 en position embrayée P1 pour coupler le moteur très basse vitesse M à l'arbre mixte 25. Plus précisément, l'étape d'embrayage E1 est mise en oeuvre par l'organe de déplacement 13 pour mettre en prise les disques 12a, 12b avec le volant 11. De préférence, l'étape d'embrayage E1 est mise en oeuvre lorsque l'arbre mixte 25 est à l'arrêt pour minimiser le frottement du volant 11 sur les disques 12a, 12b, qui peuvent ainsi être exempts de garniture.

Comme illustré sur la [Fig.8], à la fin de l'étape d'embrayage E1, la turbomachine 8 est toujours à l'arrêt A et le système d'embrayage 1 est en position embrayée P1. Suite à une commande d'un opérateur ou de manière automatique, le moteur très basse vitesse M entraîne E2 alors l'arbre mixte 25, afin d'entraîner en rotation le corps haute pression 4 et notamment le compresseur haute pression 42. L'étape d'entraînement E2 permet de faire circuler de l'air pour favoriser un refroidissement homogène dans la veine primaire V1. De préférence, l'étape d'entraînement E2 est mise en oeuvre selon une vitesse V inférieure à 10tr/min et une durée t supérieure à 30 minutes. Préférentiellement, l'étape d'entraînement E2 est mise en oeuvre selon une vitesse V inférieure à 5tr/min et une durée t supérieure à 45 minutes. Ceci assure une circulation d'air efficace qui évite toute apparition du phénomène de « bowed rotor ». Au cours de l'étape d'entraînement E2, l'équipement haute vitesse E' est également entraîné en rotation à basse vitesse, ce qui ne permet pas de générer de l'énergie mais n'entraîne aucun endommagement.

En référence à la [Fig.9], à l'issue de la durée t, l'étape de débrayage E3 est mise en oeuvre pour déplacer le système d'embrayage 1 de la position embrayée P1 vers la position débrayée P2. De même que l'étape d'embrayage E1, l'étape de débrayage est de préférence mise en oeuvre lorsque l'arbre mixte 25 est à l'arrêt pour préserver les disques 12a, 12b. A l'issue de l'étape de débrayage E3, le moteur très basse vitesse M est découplé de l'arbre mixte 25 de sorte que la turbomachine 8 peut de nouveau être mise en fonctionnement en toute sécurité pour le moteur très basse vitesse M. Lors de son fonctionnement, l'équipement haute vitesse E' est entraîné à haute vitesse et permet de générer de l'énergie électrique de manière optimale sans impacter le moteur très basse vitesse M qui est débrayé.

De préférence, le procédé d'utilisation précédemment décrit est mis en oeuvre de manière automatique après chaque arrêt A de la turbomachine 8. Un tel procédé est avantageusement simple, pratique et rapide.

## Revendications

1. Boîtier de relais d'accessoires (2) de turbomachine d'aéronef (8), la turbomachine (8) s'étendant selon un axe longitudinal (X) et comprenant un corps basse pression (5), un corps haute pression (4) et un arbre radial (21) relié au corps haute pression (4), le boîtier de relais d'accessoires (2) comprenant un train d'engrenages (22) comprenant au moins un arbre d'entrée (23), configuré pour être couplé mécaniquement à l'arbre radial (21), et une pluralité d'arbres de sortie (24), configurés pour être couplés en rotation à des équipements (E), au moins un arbre de sortie (24), désigné par la suite arbre mixte (25), étant couplé en rotation à un équipement haute vitesse (E') configuré pour fonctionner sur une plage de hautes vitesses, boîtier de relais d'accessoires (2) **caractérisé par le fait qu'**il comprend :
• un moteur très basse vitesse (M) configuré pour fonctionner sur une plage de très basses vitesses, inférieure à la plage de hautes vitesses dudit équipement haute vitesse (E'),
• un système d'embrayage (1) configuré pour s'accoupler avec ledit arbre mixte (25), le moteur très basse vitesse (M) étant monté sur le système d'embrayage (1) de sorte que :
• dans une position embrayée (P1) du système d'embrayage (1), le moteur très basse vitesse (M) est couplé à l'arbre mixte (25), de manière à entraîner en rotation le corps haute pression (4), lorsque la turbomachine (8) est à l'arrêt (A), et
• dans une position débrayée (P2) du système d'embrayage (1), le moteur très basse vitesse (M) est découplé de l'arbre mixte (25) afin d'être protégé des vitesses transmises par le corps haute pression (4) à l'arbre mixte (25) pour entraîner l'équipement haute vitesse (E') lorsque la turbomachine (8) est en fonctionnement (F).

2. Boîtier de relais d'accessoires (2) selon la revendication 1, dans lequel le moteur très basse vitesse (M) est de type électrique, de préférence exempt de réducteur.

3. Boîtier de relais d'accessoires (2) selon l'une des revendications 1 et 2, dans lequel le moteur très basse vitesse (M) comprend un rotor (M_{R}) et un stator (M_{S}), le système d'embrayage (1) comprenant :
• un volant (11) solidaire en rotation de l'arbre mixte (25),
• un organe de support (14) solidaire en rotation du rotor (M_{R}) du moteur très basse vitesse (M), monté libre en rotation autour de l'arbre mixte (25),
• un disque mobile (12a) et un disque fixe (12b) selon l'axe longitudinal (X) montés sur l'organe de support (14), de part et d'autre du volant (11), et
• un organe de déplacement (13) du disque mobile (12a) de sorte qu'en position embrayée (P1), le volant (11) soit en prise avec le disque mobile (12a) et le disque fixe (12b), et qu'en position débrayée (P2), le volant (11) soit hors prise du disque mobile (12a) et du disque fixe (12b).

4. Boîtier de relais d'accessoires (2) selon la revendication 3, dans lequel le volant (11) est monté libre selon l'axe longitudinal (X) sur l'arbre mixte (25).

5. Boîtier de relais d'accessoires (2) selon l'une des revendications 3 à 4, dans lequel l'organe de déplacement (13) se présente sous la forme d'un actionneur électromagnétique.

6. Boîtier de relais d'accessoires (2) selon l'une des revendications 3 à 5, dans lequel le disque mobile (12a) et le disque fixe (12b) sont exempts de garniture.

7. Turbomachine d'aéronef (8) s'étendant selon un axe longitudinal (X) et comprenant un corps basse pression (5), un corps haute pression (4) et un arbre radial (21) relié au corps haute pression (4), ladite turbomachine (8) comprenant un boîtier de relais d'accessoires (2) selon l'une des revendications 1 à 6 dans lequel :
• l'arbre d'entrée (23) du boîtier de relais d'accessoires (2) est couplé mécaniquement à l'arbre radial (21),
• dans la position embrayée (P1), le moteur très basse vitesse (M) est couplé au corps haute pression (4) de manière à l'entraîner en rotation afin de favoriser son refroidissement par circulation d'air lorsque la turbomachine (8) est à l'arrêt (A),
• dans la position débrayée (P2), le moteur très basse vitesse (M) est découplé du corps haute pression (4) afin d'être protégé des hautes vitesses transmises par le corps haute pression (4) à l'arbre mixte (25) pour entraîner l'équipement haute vitesse (E') lorsque la turbomachine (8) est en fonctionnement (F).

8. Procédé d'utilisation d'une turbomachine d'aéronef (8) selon la revendication 7, dans lequel le système d'embrayage (1) est initialement en position débrayée (P2), le procédé d'utilisation comprenant :
• après l'arrêt (A) de la turbomachine (8), une étape d'embrayage (E1) du moteur très basse vitesse (M) sur l'arbre mixte (25), par déplacement du système d'embrayage (1) en position embrayée (P1), et
• une étape d'entraînement (E2), par le moteur très basse vitesse (M), de l'arbre mixte (25), de manière à entraîner en rotation le corps haute pression (4) afin de favoriser son refroidissement par circulation d'air.

9. Procédé d'utilisation selon la revendication 8, dans lequel, lors de l'étape d'entraînement (E2), le moteur très basse vitesse (M) est entraîné pendant une durée (t) supérieure à 30 minutes, de préférence supérieure à 45 minutes.

10. Procédé d'utilisation selon l'une des revendications 8 et 9, dans lequel, lors du fonctionnement (F) de la turbomachine (8), le système d'embrayage (1) est en position débrayée (P2) de manière à ce que le corps haute pression (4) entraîne l'arbre mixte (25) découplé du moteur très basse vitesse (M), afin d'entraîner uniquement l'équipement haute vitesse (E').

## Patentansprüche

1. Hilfsgerätegetriebe (2) eines Flugzeugturbinentriebwerks (8), wobei sich das Turbinentriebwerk (8) gemäß einer Längsachse (X) erstreckt und einen Niederdruckkörper (5), einen Hochdruckkörper (4) und eine mit dem Hochdruckkörper (4) verbundene Radialwelle (21) umfasst, wobei das Hilfsgerätegetriebe (2) einen Getriebestrang (22) umfasst, der mindestens eine Eingangswelle (23) umfasst, die ausgelegt ist, um mechanisch an die Radialwelle (21) gekoppelt zu sein, und eine Vielzahl von Ausgangswellen (24), die ausgelegt sind, um rotatorisch mit Ausrüstungen (E) gekoppelt zu sein, wobei mindestens eine Ausgangswelle (24), die im Folgenden als gemischte Welle (25) bezeichnet wird, rotatorisch mit einer Hochgeschwindigkeitsausrüstung (E') gekoppelt ist, die ausgelegt ist, um in einem Hochgeschwindigkeitsbereich zu arbeiten, wobei das Hilfsgerätegetriebe (2) **dadurch gekennzeichnet, dass** es umfasst:
• einen Motor (M) mit sehr niedriger Drehzahl, der ausgelegt ist, um in einem sehr niedrigen Drehzahlbereich zu arbeiten, der niedriger als der hohe Drehzahlbereich der Hochgeschwindigkeitsausrüstung (E') ist,
• ein Kupplungssystem (1), das ausgelegt ist, um mit der gemischten Welle (25) zu koppeln, wobei der Motor (M) mit sehr niedriger Drehzahl derart an dem Kupplungssystem (1) angebracht ist, dass:
o in einer eingekuppelten Position (P1) des Kupplungssystems (1) der Motor (M) mit sehr niedriger Drehzahl derart mit der gemischten Welle (25) gekoppelt ist, dass der Hochdruckkörper (4) rotatorisch angetrieben wird, wenn sich das Turbinentriebwerk (8) im Stillstand (A) befindet, und
o in einer ausgekuppelten Position (P2) des Kupplungssystems (1) der Motor (M) mit sehr niedriger Drehzahl von der gemischten Welle (25) getrennt ist, um vor den Drehzahlen geschützt zu sein, die von dem Hochdruckkörper (4) auf die gemischte Welle (25) übertragen werden, um die Hochgeschwindigkeitsausrüstung (E') anzutreiben, wenn das Turbinentriebwerk (8) in Betrieb (F) ist.

2. Hilfsgerätegetriebe (2) nach Anspruch 1, wobei der Motor (M) mit sehr niedriger Drehzahl vom elektrischen Typ, vorzugsweise getriebefrei, ist.

3. Hilfsgerätegetriebe (2) nach einem der Ansprüche 1 oder 2, wobei der Motor (M) mit sehr niedriger Drehzahl einen Rotor (M_{R}) und einen Stator (Ms) umfasst, wobei das Kupplungssystem (1) umfasst:
• ein Schwungrad (11), das rotationsfest mit der gemischten Welle (25) verbunden ist,
• ein Stützorgan (14), das rotationsfest mit dem Rotor (M_{R}) des Motors (M) mit sehr niedriger Geschwindigkeit verbunden ist und um die gemischte Welle (25) frei rotierend angebracht ist,
• eine bewegliche Scheibe (12a) und eine feste Scheibe (12b) gemäß der Längsachse (X), die auf dem Stützorgan (14) zu beiden Seiten des Schwungrads (11) angebracht sind, und
• ein Organ (13) zum Verlagern der beweglichen Scheibe (12a) derart, dass das Schwungrad (11) in der eingekuppelten Position (P1) mit der beweglichen Scheibe (12a) und der festen Scheibe (12b) in Eingriff ist, und das Schwungrad (11) in der ausgekuppelten Position (P2) mit der beweglichen Scheibe (12a) und der festen Scheibe (12b) außer Eingriff ist.

4. Hilfsgerätegetriebe (2) nach Anspruch 3, wobei das Schwungrad (11) gemäß der Längsachse (X) frei auf der gemischten Welle (25) angebracht ist.

5. Hilfsgerätegetriebe (2) nach einem der Ansprüche 3 bis 4, wobei das Verlagerungsorgan (13) in Form eines elektromagnetischen Aktuators vorliegt.

6. Hilfsgerätegetriebe (2) nach einem der Ansprüche 3 bis 5, wobei die bewegliche Scheibe (12a) und die feste Scheibe (12b) frei von Belägen sind.

7. Flugzeugturbinentriebwerk (8), das sich gemäß einer Längsachse (X) erstreckt und einen Niederdruckkörper (5), einen Hochdruckkörper (4) und eine mit dem Hochdruckkörper (4) verbundene Radialwelle (21) umfasst, wobei das Turbinentriebwerk (8) ein Hilfsgerätegetriebe (2) nach einem der Ansprüche 1 bis 6 umfasst, wobei:
• die Eingangswelle (23) des Hilfsgerätegetriebes (2) mechanisch mit der Radialwelle (21) gekoppelt ist,
• in einer eingekuppelten Position (P1) der Motor (M) mit sehr niedriger Drehzahl derart mit dem Hochdruckkörper (4) gekoppelt ist, dass er rotatorisch angetrieben wird, um seine Kühlung durch Luftzirkulation zu fördern, wenn sich das Turbinentriebwerk (8) im Stillstand (A) befindet,
• in der ausgekuppelten Position (P2) der Motor (M) mit sehr niedriger Drehzahl vom Hochdruckkörper (4) getrennt ist, um vor den hohen Drehzahlen geschützt zu sein, die vom Hochdruckkörper (4) auf die gemischte Welle (25) übertragen werden, um die Hochgeschwindigkeitsausrüstung (E') anzutreiben, wenn das Turbinentriebwerk (8) in Betrieb ist (F).

8. Verfahren zur Verwendung eines Flugzeugturbinentriebwerks (8) nach Anspruch 7, wobei sich das Kupplungssystem (1) anfänglich in der ausgekuppelten Position (P2) befindet, wobei das Verwendungsverfahren umfasst:
• nach dem Stillstand (A) des Turbinentriebwerks (8) einen Schritt des Einkuppelns (E1) des Motors (M) mit sehr niedriger Drehzahl auf die gemischte Welle (25) durch Verlagern des Kupplungssystems (1) in die eingekuppelte Position (P1), und
• einen Schritt des Antreibens (E2) der gemischten Welle (25) durch den Motor (M) mit sehr niedriger Drehzahl derart, dass der Hochdruckkörper (4) rotatorisch angetrieben wird, um seine Kühlung durch Luftzirkulation zu fördern.

9. Verwendungsverfahren nach Anspruch 8, wobei während des Antriebsschritts (E2) der Motor (M) mit sehr niedriger Drehzahl während einer Dauer (t) von über 30 Minuten, vorzugsweise über 45 Minuten, angetrieben wird.

10. Verwendungsverfahren nach einem der Ansprüche 8 und 9, wobei während des Betriebs (F) des Turbinentriebwerks (8) das Kupplungssystem (1) in der ausgekuppelten Position (P2) derart ist, dass der Hochdruckkörper (4) die vom Motor (M) mit sehr niedriger Drehzahl getrennte gemischte Welle (25) antreibt, um nur die Hochgeschwindigkeitsausrüstung (E') anzutreiben.

## Claims

1. An accessory gearbox (2) for an aircraft turbomachine (8), the turbomachine (8) extending along a longitudinal axis (X) and comprising a low-pressure spool (5), a high-pressure spool (4) and a radial shaft (21) connected to the high-pressure spool (4), the accessory gearbox (2) comprising a gear train (22) comprising at least one input shaft (23), configured to be mechanically coupled to the radial shaft (21), and a plurality of output shafts (24), configured to be rotatably coupled to equipment (E), at least one output shaft (24), hereinafter referred to as a mixed shaft (25), being rotatably coupled to high-speed equipment (E') configured to operate over a high speed range, the accessory gearbox (2) **being characterized in that** it comprises:
• a very low-speed motor (M) configured to operate over a very low speed range, below the high speed range of said high-speed equipment (E'),
• a clutch system (1) configured to mate with said mixed shaft (25), the very low-speed motor (M) being mounted to the clutch system (1) so that:
o in a clutched position (P1) of the clutch system (1), the very low-speed motor (M) is coupled to the mixed shaft (25), so as to rotatably drive the high-pressure spool (4), when the turbomachine (8) is stopped (A), and
o in a declutched position (P2) of the clutch system (1), the very low-speed motor (M) is decoupled from the mixed shaft (25) in order to be protected from the speeds transmitted by the high-pressure spool (4) to the mixed shaft (25) to drive the high-speed equipment (E') when the turbomachine (8) is in operation (F).

2. The accessory gearbox (2) according to claim 1, wherein the very low-speed motor (M) is of the electrical type, preferably free of a reducer.

3. The accessory gearbox (2) according to one of claims 1 and 2, wherein the very low-speed motor (M) comprises a rotor (M_{R}) and a stator (M_{S}), the clutch system (1) comprising:
• a flywheel (11) rotatably integral with the mixed shaft (25),
• a support member (14) rotatably integral with the rotor (M_{R}) of the very low-speed motor (M), mounted free to rotate around the mixed shaft (25),
• a movable disk (12a) and a fixed disk (12b) along the longitudinal axis (X) mounted to the support member (14) on either side of the flywheel (11), and
• a movement member (13) for moving the movable disk (12a) so that in the clutched position (P1), the flywheel (11) is engaged with the movable disk (12a) and the fixed disk (12b), and in the declutched position (P2), the flywheel (11) is disengaged from the movable disk (12a) and the fixed disk (12b).

4. The accessory gearbox (2) according to claim 3, wherein the flywheel (11) is freely mounted along the longitudinal axis (X) to the mixed shaft (25).

5. The accessory gearbox (2) according to one of claims 3 to 4, wherein the movement member (13) is in the form of an electromagnetic actuator.

6. The accessory gearbox (2) according to one of claims 3 to 5, wherein the movable disk (12a) and the fixed disk (12b) are free of lining.

7. An aircraft turbomachine (8) extending along a longitudinal axis (X) and comprising a low-pressure spool (5), a high-pressure spool (4) and a radial shaft (21) connected to the high-pressure spool (4), said turbomachine (8) comprising an accessory gearbox (2) according to one of claims 1 to 6, wherein:
• the input shaft (23) of the accessory gearbox (2) is mechanically coupled to the radial shaft (21),
• in the clutched position (P1), the very low-speed motor (M) is coupled to the high-pressure spool (4) so as to rotatably drive it in order to facilitate its cooling by air circulation when the turbomachine (8) is stopped (A),
• in the declutched position (P2), the very low-speed motor (M) is decoupled from the high-pressure spool (4) in order to be protected from the high speeds transmitted by the high-pressure spool (4) to the mixed shaft (25) to drive the high-speed equipment (E') when the turbomachine (8) is in operation (F).

8. A method of using an aircraft turbomachine (8) according to claim 7, wherein the clutch system (1) is initially in the declutched position (P2), the method of use comprising:
• after the turbomachine (8) has stopped (A), a step of clutching (E1) the very low-speed motor (M) to the mixed shaft (25), by moving the clutch system (1) to the clutched position (P1), and
• a step of driving (E2), by the very low-speed motor (M), the mixed shaft (25), so as to rotatably drive the high-pressure spool (4) in order to promote its cooling by air circulation.

9. The method of use according to claim 8, wherein, during the driving step (E2), the very low-speed motor (M) is driven for a duration (t) of more than 30 minutes, preferably more than 45 minutes.

10. The method of use according to one of claims 8 and 9, wherein, during operation (F) of the turbomachine (8), the clutch system (1) is in the declutched position (P2) so that the high-pressure spool (4) drives the mixed shaft (25) decoupled from the very low-speed motor (M), in order to drive only the high-speed equipment (E').
